(19) Europäisches Patentamt
European Patent Office
Office européen des brevets

(11) Numéro de publication: **0 072 719**
**A1**

(12) # DEMANDE DE BREVET EUROPEEN

(21) Numéro de dépôt: 82401243.9

(22) Date de dépôt: 02.07.82

(51) Int. Cl.[3]: **C 08 F 2/38**
C 08 F 220/04, A 01 N 55/04
C 08 F 230/04

(30) Priorité: 03.07.81 FR 8113080

(43) Date de publication de la demande: 23.02.83 Bulletin 83/8

(84) Etats contractants désignés: DE GB IT SE

(71) Demandeur: ETAT-FRANCAIS représenté par le DELEGUE GENERAL POUR L'ARMEMENT
Bureau des Brevets et Inventions de la Délégation Générale pour l'Armement 14, rue Saint-Dominique
F-75997 Paris Armées(FR)

(72) Inventeur: Battais, Alain
"La Seigneurie" Bât 3 270 Avenue du Pic Saint-Loup
F-34000 Montpellier(FR)

(72) Inventeur: Boutevin, Bernard
1, rue Anselme Mathieu Les Terres Blanches
F-34000 Montpellier(FR)

(72) Inventeur: Pietrasanta, Yves
14 Place Méril Poujade
F-34140 Meze(FR)

(54) **Télomères organométalliques, procédés de préparation et compositions biocides obtenues.**

(57) L'invention concerne un télomère organométallique utilisable notamment comme agent biocide.

Il est représenté par la formule

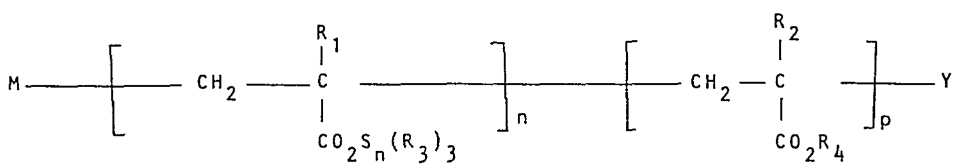

dans laquelle

- n et p représentent des nombres compris entre 1 et 100 tel que le rapport

$$\frac{n}{n+p}$$

soit inférieur ou égal à 0,75,

- $R_1$ et $R_2$ identiques ou différent, représentent un atome d'hydrogène ou un groupement méthyle,
- $R_3$ représente un groupement alkyle linéaire ou ramifié de 1 à 12 atomes de carbone, un groupement phényle substitué ou non
- $R_4$ représente un atome d'hydrogène ou l'une des significations indiquées pour $R_3$
- M et Y provenant d'un agent de transfert dans lequel y représente l'hydrogène, le chlore ou le brome et M un groupement organique électroattracteur.

Application à la lutte contre la croissance d'organismes parasites notamment marins.

EP 0 072 719 A1

0072719

# TELOMERES ORGANOMETALLIQUES, PROCEDES DE PREPARATION ET COMPOSITIONS BIOCIDES OBTENUES

Le secteur technique de la présente invention est celui des compositions biocides, renfermant des groupements organostanniques, destinées à la lutte contre la croissance d'organismes parasites.

Il est connu d'utiliser des dérivés organostanniques pour lutter contre des organismes parasites par exemple des bactéries, des champignons, des moisissures ou plus particulièrement des organismes marins. Il est connu également que ces dérivés présentent une certaine toxicité qui peut être dommageable pour l'environnement ambiant. Ainsi, lorsqu'on utilise une peinture comprenant un dérivé organostannique pour lutter contre la croissance d'organismes marins, la concentration en dérivé organostannique est assez rapidement très importante autour du support recouvert par cette peinture en raison de la vitesse de lixiviation de l'espèce toxique. On a donc recherché des résines biocides dans lesquelles le principe actif est combiné à un polymère par liaison covalente afin de diminuer la vitesse de lixiviation et augmenter d'autant la durée de vie de ce type de peinture pour une quantité de principe actif comparable à celle existante dans les peintures actuellement utilisées.

Les brevets français 1 384 699 et canadien 989 998 décrivent des compositions biocides dans lesquelles on fixe des molécules stannées sur des polymères ou copolymères supports à fonctions réactives. Le brevet français décrit un procédé de préparation de résines biocides selon lequel on polymérise ou copolymérise divers monomères organométalliques. Le brevet canadien décrit un procédé de stynthèse de copolymères organostanniques selon lequel on estérifie un support à haut poids moléculaire renfermant des fonctions réactives avec des oxydes ou hydroxydes de trialkyl ou triarylétain.

L'inconvénient de ce genre de compositions réside dans le fait que par suite de l'hydrolyse des molécules stannées et de la formation d'acides qui en résulte, la peinture comprenant ce genre de résine se détériore rapidement par formation de plaques se détachant de la surface du support protégé.

L'objectif de la présente invention est de mettre à la disposition de l'homme de l'art un composé biocide incorporable notamment dans les peintures, compatible avec un grand nombre de liants de base et présentant une activité antisalissure nettement améliorée par rapport aux composés biocides connus actuellement.

L'invention a donc pour objet un télomère organométallique utilisable notamment comme agent biocide, caractérisé en ce qu'il est représenté par la formule générale suivante

0072719

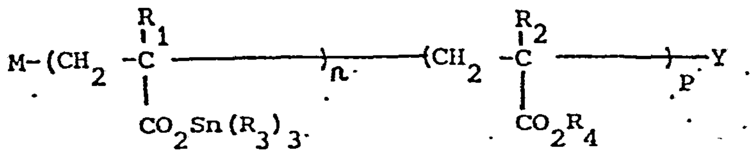

dans laquelle : -n et p représentent des nombres compris entre 1 et 100 tel que le rapport n/n+p soit inférieur ou égal à 0,75;

- $R_1$ et $R_2$, identiques ou différents, représentent un atome d'hydrogène ou un groupement méthyle;
- $R_3$ représente un groupement alkyle linéaire ou ramifié de 1 à 12 atomes de carbone, un groupement phényle substitué ou non;
- $R_4$ représente un atome d'hydrogène ou l'une des significations indiquées pour $R_3$;
- M et Y provenant d'un agent de transfert dans lequel Y représente l'hydrogène, le chlore ou le brome et M un groupement organique électroattracteur.

Avantageusement, M peut être choisi parmi les groupements organiques électroattracteurs suivants :

$-CCl_3$, $-SR_5$, $-PO(OR_5)_2$, $-P(R_5)_2$, $-CCl_2-CO_2R_5$, 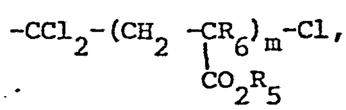,

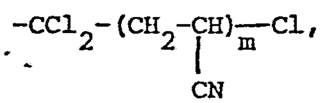, 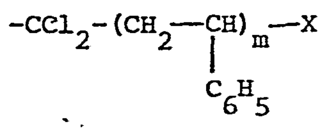

$-CCl_2-(CH_2-CHCl)_m-X$, $-CCl_2-(CH_2-CCl_2)_m-Cl$, $-CCl_2-(CF_2-CFZ)_m-X$, et

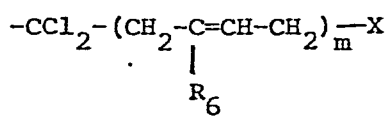

dans lesquels m représente un nombre entier compris entre 1 et 100, $R_5$ un atome d'hydrogène ou un groupement alkyle comprenant 1 à 12 atomes de carbone, $R_6$ un atome d'hydrogène ou un groupement méthyle, Z indifféremment le chlore ou le fluor, X indifféremment le chlore ou l'hydrogène.

Plus particulièrement m peut être compris entre 1 et 10 et $R_5$ est un groupement méthyle, éthyle, propyle et butyle.

Une famille préférée de télomères est celle dans laquelle :

- Y représente le chlore
- M est choisi parmi les groupements $-CCl_3$, $-CCl_2-CF_3$, $-CCl_2-COOCH_3$,
- $CCl_2-CH_2-CHCl-COOCH_3$, $-CCl_2-(CF_2-CFZ)_m-Cl$ où m = 1,2 ou 3 et Z représente indifféremment le chlore ou le fluor;
- $R_3$ représente un groupement éthyle, propyle ou butyle,
- $R_4$ représente l'hydrogène ou un groupement méthyle.

Une autre famille préférée de télomère est celle dans laquelle :

- Y représente l'hydrogène ou le brome,
- M représenté l'un des groupements $-CCl_3$ ou $-PO(OC_2H_5)_2$,

- $R_3$ représente un groupement éthyle, propyle ou butyle,
- $R_4$ représenté l'hydrogène ou un groupement méthyle.

L'invention a également pour objet des procédés de préparation des télomères définis précédemment.

Selon une méthode, on fait réagir ensemble un agent de transfert (II), un monomère organostannique (III), un comonomère acrylique (IV).

- MY; n 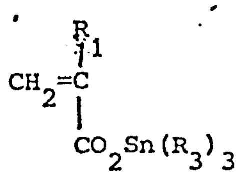 ; p 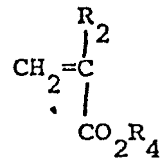

(III) (IV)

- M,Y,$R_2$,$R_3$ et $R_4$ présentant les significations sus-indiquées, en présence d'un catalyseur constitué par une poudre métallique ou un sel métallique dans lequel le métal est susceptible de s'oxyder, d'un solvant polaire, pendant environ 24 à 48 heures et à une température voisine de la température d'ébullition du mélange.

Avantageusement, le solvant polaire est choisi parmi les nitriles tels l'acétonitrile, le propionitrile ou le butyronitrile, le catalyseur étant choisi parmi le groupe constitué par le fer, le cuivre, le magnésium, le chlorure cuivreux, le chlorure ferreux, le ferrocyanure de potassium, le chlorure cuivrique, le ferricyanure de potassium ou bien le chlorure ferrique en présence d'un agent réducteur tel que la benzoïne.

De façon privilégiée le rapport des concentrations du catalyseur aux monomères est compris entre $3.10^{-3}$ et $3.10^{-2}$.

Selon une autre méthode, on fait réagir ensemble un agent de transfert (II), un monomère organostannique (III) et un comonomère acrylique (IV).

- MY (II) ; n 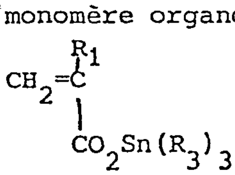 (III) ; p 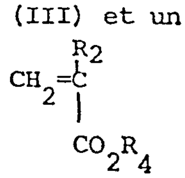 (IV)

- M,Y,$R_1$,$R_2$,$R_3$,$R_4$ présentant l'une quelconque des significations sus-indiquées en présence d'un catalyseur constitué par un amorceur radicalaire du type péroxyde de benzoyle ou azobis-isobutyronitrile, d'un solvant de télomérisation radicalaire du type benzène, toluène, xylène pendant environ 5 à 10 heures et à une température voisine de la température d'ébullition du mélange.

Avantageusement, le rapport des concentrations de l'agent de transfert (II) et des monomères organostanniques est compris entre 2 et 10.

Selon encore une autre méthode, on fait réagir dans une première étape un agent de transfert MY (II) avec un monomère acrylique (V) pour obtenir un

télomère (VI) selon la réaction :

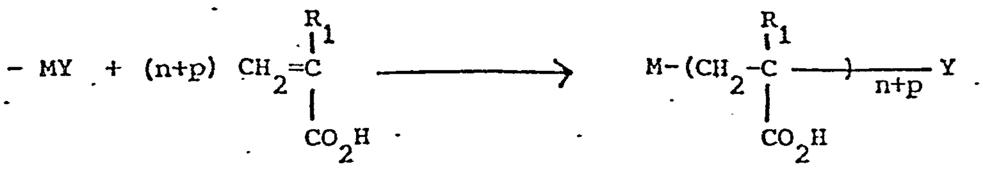

(II) (V) (VI)

- M,Y,n,p,$R_1$ présentant l'une quelconque des significations sus-indiquées. La réaction est effectuée en présence d'un catalyseur constitué par une poudre métallique ou un sel métallique dans lequel le métal est susceptible de s'oxyder, d'un solvant polaire, le mélange obtenu étant maintenu à reflux pendant 10 à 48 h; dans une seconde étape, on traite le télomère obtenu à l'aide d'un dérivé organostannique (VII) selon la réaction :

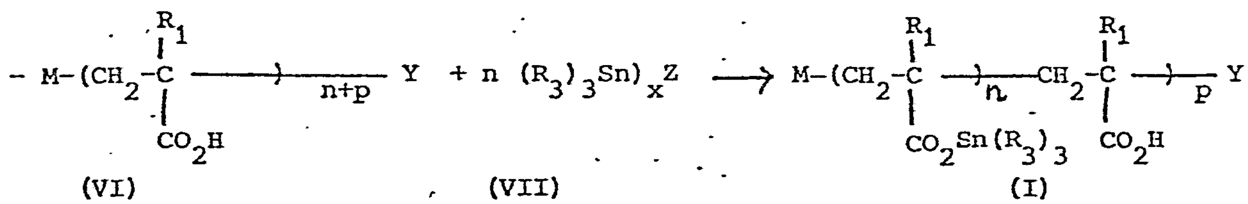

(VI) (VII) (I)

- $R_3$ ayant la signification sus-indiquée et où x = 2, Z=O ou encore x = 1, Z = Cl, en présence d'un solvant polaire tel que par exemple le tétrahydrofuranne, le mélange obtenu étant porté à reflux pendant environ 10 à 48 heures.

L'invention a encore pour objet des compositions biocides comprenant un télomère organométallique, tel que défini ou obtenu précédemment, pour lutter contre des organismes parasites.

Avantageusement, une peinture destinée à la lutte contre la croissance d'organismes comprend une base de type classique et environ 15 à 30% en poids du télomère orgamétallique selon l'invention.

Un tout premier avantage de l'invention réside dans le fait que le télomère selon l'invention est utilisé en tant qu'additif à des bases de peintures classiques, utilisation qui est tout-à-fait nouvelle dans le secteur technique des peintures. Il en résulte que la couche de peinture ne se dégrade pas par hydrolyse.

Un autre avantage réside dans le fait que le principe actif est lié chimiquement à un additif comptabile avec la plupart des liants classiques. Il en résulte que les doses nécessaires sont moins fortes pour une activité identique, ce qui diminue d'autant la pollution du milieu ambiant.

D'autres avantages sont liés spécifiquement à l'utilisation des télomères selon l'invention. On notera tout d'abord l'adhésivité sur métaux qui est très nettement améliorée en raison de la présence de groupements acides résiduels. On notera ensuite la possibilité de moduler les propriétés en fonction de l'effet recherché. Ainsi, si on s'attache aux qualités de glissance on préfèrera,

les télomères comprenant des télogènes fluorés qui s'orientent à la surface du support, ce qui diminue donc l'énergie de surface. Si par contre on désire favoriser la comptabilité du télomère avec une résine de base particulière, ou l'adhésivité de la couche de peinture sur les couches précédentes, il suffit de prévoir un agent télogène comportant les mêmes monomères que le liant de la peinture de base ou de ces couches précédentes.

Comme il ressort déjà de ce qui précède, on peut ajuster dans un très large domaine de valeurs le poids moléculaire des télomères selon l'invention et ce de manière peu polydispersé. Le poids moléculaire est donc parfaitement contrôlable et peut être déterminé à l'avance.

Enfin, la nature de l'agent de transfert permet d'accéder à des télomères ou des cotélomères biséquencés, contenant des atomes ou des séquences spécifiques qui peuvent leur conférer des propriétés particulières.

Dans la présente description, on entend par télomère (ou cotélomère) un polymère dont les extrémités sont parfaitement connues et proviennent d'un agent de transfert appelé télogène donnant deux radicaux complémentaires, le degré de polymérisation de ce polymère étant inférieur à 100.

Divers procédés permettent de préparer les télomères selon l'invention. On a cité à titre d'illustration trois modes particuliers de synthèse que l'homme de l'art peut adapter de façon évidente. On notera cependant que dans certains cas la nature de l'agent de transfert utilisé impose un mode de réalisation particulier. Selon un premier mode, la télomérisation peut se faire par catalyse rédox, ce qui nécessite l'utilisation d'un solvant polaire pour solubiliser le catalyseur. On utilise de préférence les nitriles et parmi ceux-ci les nitriles aliphatiques tels l'acétonitrile, le propionitrile, le butyronitrile. Le solvant est dans ce cas miscible avec les réactifs et n'entre pas en compétition avec l'agent télogène lors des réactions de transfert. Le catalyseur est de préférence, soit une poudre métallique notamment le fer, le cuivre et le magnésium, soit un sel métallique dans lequel le métal est susceptible de passer à un degré d'oxydation supérieur notamment le chlorure cuivreux, le chlorure ferreux, le ferricyanure de potassium. Une autre solution consiste à utiliser un sel métallique réductible par un réducteur tel la benzoïne; ce sel métallique peut être le chlorure ferrique.

Pour mettre en oeuvre ce premier mode de réalisation, on réalise la cotélomérisation d'un monomère organostannique avec divers comonomères acryliques ou autres. Le comonomère organostannique est comme indiqué un acrylate ou un méthacrylate tri-organostannique par l'exemple l'acrylate ou le méthacrylate de triéthylétain, tripopylétain, tri-n-butylétain, triphénylétain; bien entendu l'étain peut être porteur de radicaux différents. Le comonomère du type acrylique est de préférence l'acrylate ou le méthacrylate de méthyle, d'éthyle,

de propyle, l'acide acrylique ou méthacrylique, L'agent de transfert préféré est dans ce cas $CCl_4$, $CF_3CCl_3$, $CCl_3-CO_2CH_3$, $CCl_3-CH_2-CHCl-CO_2CH_3$, $CCl_3-(CF_2-CFZ)_m-Cl$ où m=1,2 ou 3 et Z représente indifféremment le chlore ou le fluor.

Une étude théorique de la catalyse rédox a montré que le degré de polymérisation du télomère peut être ajusté à volonté car celui-ci dépend uniquement du rapport des concentrations initiales respectives de catalyseur et des monomères. On préfère que ce rapport soit compris entre $3.10^{-3}$ et $3.10^{-2}$. Les télomères obtenus ont alors un degré de polymérisation compris entre 10 et 100. Toutefois, il faut noter que la nature du catalyseur influe sur le poids moléculaire du télomère obtenu. Ainsi, on a remarqué que la catalyse aux sels cuivreux ou cuivrique conduit en général à des télomères à bas poids moléculaires. Par contre, la catalyse avec les ferro- et ferricyanures de potassium permet d'obtenir des télomères de degré moyen de polymérisation en nombre $\overline{DP}_n$ de l'ordre de 50 à 100. Avec les sels ferreux ou ferriques, le $\overline{DP}_n$ est de l'ordre de 10 à 50.

Selon un second mode de réalisation, la télomérisation peut être réalisée par amorçage radicalaire. Les amorceurs utilisés sont ceux de la catalyse radicalaire classique parmi lesquels on préfère le péroxyde de benzoyle ou l'azobisisobutyronitrile. Il en est de même des solvants et on a utilisé notamment le benzène, le toluène et l'acétonitrile. Le monomère organostannique et le comonomère acrylique sont ceux indiqués précédemment.

Lorsque l'on met en oeuvre une télomérisation radicalaire, on note que le poids moléculaire du télomère obtenu dépend du rapport de la concentration du télogène et du monomère. La longueur de la chaîne peut donc être ajustée à volonté On préfère que ce rapport soit compris entre 2 et 10 ce qui permet d'obtenir un $\overline{DP}_n$ de l'ordre de 10 à 50. On a constaté que les masses moléculaires obtenues en catalyse radicalaire sont en général plus élevées qu'en catalyse rédox dans des conditions comparables. Toutefois, les caractéristiques sont sensiblement voisines Ainsi, lorsque le rapport n/p est inférieur à 0,66 (60% de comonomère dans le télomère) le télomère se présente sous la forme d'une poudre. En dessous de 60% de comonomère dans le télomère, celui-ci se présente sous forme de cires plus ou moins visqueuses. Lorsque $R_4$ est un alkyle, les télomères sont toujours sous forme de cires. Bien entendu, l'augmentation du degré de polymérisation accroît la viscosité de ces cires qui peuvent devenir extrêmement visqueuses.

Selon un troisième mode de réalisation, le télomère selon l'invention peut être obtenu par greffage de composés organostanniques sur un télomère support comportant des fonctions réactives. A titre d'exemple, on peut faire réagir un télomère à fonctions réactives de type acide carboxylique avec l'oxyde de bis triorgano-étain. A cette fin, on s'y prend de la manière suivante ou de manière équivalente. On prépare d'abord le télomère support selon le schéma suivant :

$$-M-Y + (n+p)\ CH_2=C(R_1)-CO_2H \longrightarrow M-(CH_2-C(R_1)(CO_2H))_{n+p}-Y.$$

La réaction se fait dans une première étape par catalyse rédox et on utilise les catalyseurs et solvants mentionnés dans le premier mode de réalisation et le degré de polymérisation est ajusté de manière identique.

Le degré moyen de polymérisation en nombre $DP_n$ de ces télomères varie entre 10 et 100 lorsque l'on utilise le mélange trichlorure ferrique-benzoïne comme système catalytique. Ce $DP_n$ peut être extrêmement variable lorsque l'on utilise les sels de cuivre; ainsi par exemple, il vaut respectivement 1 et 3 dans le cas des acides méthacrylique et acrylique lorsque le rapport des concentrations de catalyseur au monomère est voisin de $10^{-2}$ et vaut respectivement 30 et 50 lorsque ce rapport est voisin de $10^{-3}$.

Dans une seconde étape on fixe l'oxyde de bis-triorganoétain par estérification selon la réaction :

$$-M-(CH_2-C(R_1)(CO_2H))_{n+p}-Y + n(R_3)_3-Sn-O-Sn-(R_3)_3 \longrightarrow M-(CH_2-C(R_1)(CO_2Sn(R_3)_3))_n-(CH_2-C(R_1)(CO_2H))_p-Y$$

MY, $R_1$, $R_3$ n et p ayant les significations sus-indiquées, la réaction ayant lieu dans un solvant polaire tel que le tétrahydrofuranne pendant une durée de 10 à 48 heures à une température voisine de 70°C.

En fin de réaction, le télomère substitué est isolé par précipitation dans un non solvant tel que le pentane.

Ces télomères se présentent sous forme de poudres ou de liquides visqueux suivant le nombre de fonctions estérifiées le taux d'estérification ne dépasse en aucun cas 70%.

Les exemples suivants illustrent des modes de réalisation particuliers.

EXEMPLE 1 -

On réalise la cotélomérisation par catalyse rédox de l'acrylate de tributylétain et de l'acrylate de méthyle.

Dans cet exemple, l'agent télogène utilisé est le tétrachlorure de carbone.

Dans un ballon de 250ml muni d'un réfrigérant, on introduit successivement 15,82g (0,044 mole) d'acrylate de tributylétain, 3,97g (0,046 mole) d'acrylate de méthyle, 0,062g ($4.10^{-4}$ mole) de trichlorure ferrique, 0,083g ($4.10^{-4}$ mole) de benzoïne, 4,41g ($2,86.10^{-2}$ mole) de tétrachlorure de carbone et 150ml d'acétonitrile.

Le mélange réactionnel est porté à l'ébullition pendant 24 heures. Après refroidissement et évaporation du solvant, on recueille 17,8g de cotélomère

(masse moléculaire moyenne en nombre $\overline{M}_n = 16000$). Le produit se présente sous forme d'une cire brune et le rendement de la réaction est de 90%. Les substituants sont donc les suivants :

$R_1 = H$; $R_2 = H$, $R_3 = C_4H_9$ ; $R_4 = CH_3$; $M = CCl_3$ ; $Y = Cl$.

EXEMPLE 2 -

On réalise la cotélomérisation par catalyse rédox de l'acrylate de tributylétain et de l'acide acrylique. On opère comme indiqué dans l'exemple 1 en remplaçant uniquement l'acrylate de méthyle par l'acide acrylique. Le cotélomère obtenu a une masse moléculaire moyenne en nombre $\overline{M}_n$ de 13000 et se présente également sous forme de cire brune. Le rendement est également de 90%. Les substituants sont donc les suivants :

$R_1 = H$; $R_2 = H$; $R_3 = C_4H_9$; $R_4 = H$; $M = CCl_3$; $Y = Cl$.

EXEMPLE 3 -

On réalise la cotélomérisation par catalyse rédox de l'acrylate de tributylétain et de l'acide méthacrylique. On opère comme indiqué dans l'exemple 1 en remplaçant uniquement l'acrylate de méthyle par l'acide méthacrylique.

Le cotélomère obtenu a une masse moléculaire moyenne de nombre $\overline{M}_n$ de 10000 et se présente également sous forme de cire brune. Le rendement est de 90%. Les substituants sont donc les suivants :

$R_1 = H$; $R_2 = CH_3$; $R_3 = C_4H_9$; $R_4 = H$; $M = CCl_3$; $Y = Cl$.

EXEMPLE 4 -

On réalise les trois cotélomérisations précédentes par catalyse rédox, en utilisant les agents télogènes suivants :

$Cl\ (CFCl-CF_2)_m-CCl_3$, $CF_3-CCl_3$, $CCl_3-\underset{O}{\underset{\|}{C}}-O-CH_3$; $CCl_3-CH_2-CHCl-COOCH_3$; $m = 1,2$ ou 3.

On obtient des cotélomères dont les masses moléculaires moyennes $\overline{M}_n$ sont de l'ordre de 10000 à 20000. Ils se présentent tous sous forme de cire. Le rendement varie de 75 à 90% suivant l'agent télogène utilisé.

EXEMPLE 5 -

On réalise la cotélomérisation par catalyse rédox de l'acrylate de tributylétain et de l'acide méthacrylique. On opère comme indiqué dans l'exemple 1 en faisant varier les pourcentages de monomères.

Dans un ballon de 250ml muni d'un réfrigérant, on introduit successivement 7,22g (0,02 mole) d'acrylate de tributylétain, 8,6g (0,1 mole) d'acide méthacrylique, 0,087g ($5.10^{-4}$ mole) de trichlorure ferrique, 0,113g ($5.10^{-4}$ mole) de benzoïne, 5,96g (3,87 $10^{-2}$ mole) de tétrachlorure de carbone et 150ml d'acétonitrile.

Le mélange réactionnel est porté à l'ébullition pendant 24 heures. Après refroidissement et précipitation du produit dans le pentane on recueille 14,4g de cotélomère (masse moléculaire moyenne en nombre $\overline{M}_n$ = 14000). Le produit se présente sous forme de cire brune et le rendement de la réaction est voisin de 90%. Les substituants sont donc les suivants :

$R_1$ = H; $R_2$ = $CH_3$ ; $R_3$ = $C_4H_9$ ; $R_4$ = H ; M = $CCl_3$ ; Y = Cl.

EXEMPLE 6 -

On réalise la cotélomérisation par catalyse rédox de l'acrylate de triphénylétain avec l'acide acrylique. On opère comme indiqué dans l'exemple 2 en remplaçant uniquement l'acrylate de tributylétain par l'acrylate de triphénylétain. Le cotélomère obtenu a une masse moléculaire moyenne en nombre $\overline{M}_n$ voisine de 20000 et le rendement est voisin de 80%. Les substituants sont donc les suivants :

$R_1$ = H ; $R_2$ = H ; $R_3$ = $C_6H_5$ ; $R_4$ = H ; M = $CCl_3$ ; Y = Cl.

EXEMPLE 7 -

On réalise la cotélomérisation par amorçage radicalaire de l'acrylate de tributylétain avec l'acide acrylique.

Dans un ballon de 250ml on introduit 16g ($4,43.10^{-2}$ mole) d'acrylate de tributylétain, 4,32g ($6.10^{-2}$ mole) d'acide acrylique, 2,76g ($2.10^{-2}$ mole) de phosphonate de diéthyle, 2,42g ($10^{-2}$ mole) de péroxyde de benzoyle et 150ml de benzène.

Le mélange est porté à l'ébullition pendant 6 heures. Après refroidissement et évaporation du solvant le produit est lavé plusieurs fois à l'éther. On recueille 17g de cotélomère qui se présente sous forme de poudre blanche. Le rendement de la réaction est de l'ordre de 85%. La masse moléculaire moyenne en nombre $\overline{M}_n$ est voisine de 90000. Les substituants sont les suivants :

$R_1$ = H ; $R_2$ = H ; $R_3$ = $C_4H_9$ ; $R_4$ = H ; M = $(C_2H_5O)_2$ (O)P- ; Y = H.

EXEMPLE 8 -

On réalise la cotélomérisation par amorçage radicalaire de l'acrylate de tributylétain avec l'acrylate de méthyle. On opère comme indiqué dans l'exemple 7 en remplaçant uniquement l'acide acrylique par l'acrylate de méthyle. Le cotélomère obtenu a une masse moléculaire moyenne en nombre $\overline{M}_n$ de 100000 et se présente également sous forme de poudre blanche. Le rendement est de 85%. Les substituants sont donc les suivants :

$R_1$ = H ; $R_2$ = H ; $R_3$ = $C_4H_9$ ; $R_4$ = $CH_3$ ; M $(C_2H_5O)_2$ (O)P- ; H.

EXEMPLE 9 -

On réalise les deux cotélomérisation précédentes par amorçage radicalaire en remplaçant uniquement l'agent télogène par $CCl_3$-Br. On obtient deux cotélomères de masse moléculaire moyenne en nombre sensiblement égale à 1000. Le rendement est

identique. Les substituants sont donc dans les deux cas les suivants : $R_1 = H$ ; $R_2 = H$ ; $R_3 = C_4H_9$ ; $R_4 = H$ ; $M = CCl_3$ ; Br et $R_1 = H$ ; $R_2 = H$ ; $R_3 = C_4H_9$ ; $R_4 = CH_3$ ; $M = CCl_3$ ; $Y = Br$.

EXEMPLE 10 -

On réalise la cotélomérisation par amorçage radicalaire de l'acrylate de tributylétain avec l'acide acrylique. On opère comme indiqué dans l'exemple 7 en faisant varier le rapport molaire (télogène) / (monomère).

Dans un ballon de 250ml on introduit les mêmes quantités d'acrylate de tributylétain d'acide acrylique de péroxyde de benzoyle et de benzène que dans l'exemple 7. On ajoute au mélange 14,35g (0,104 mole) de phosphonate de diéthyle.

Le mélange est porté à l'ébullition pendant 6h. Après refroidissement, évaporation du solvant et lavage à l'éther, on recueille 18g de cotélomère (rendement 90%) de masse moléculaire moyenne en nombre $\overline{M}_n$ voisine de 6000. Les substituants sont identiques à ceux de l'exemple 7.

EXEMPLE 11 -

1 : SYNTHESE DES TELOMERES SUPPORTS

Dans un ballon de 3 litres, on introduit 6,59 moles (567g) d'acide méthacrylique, 0,0516 mole (8,38g) de chlorure ferrique, 0,0516 mole (10,93g) de benzoïne, 0,826 mole (127,20g) de tétrachlorure de carbone et 1200ml d'acétonitrile. On porte à reflux en agitant pendant 1 heure. Après refroidissement, on filtre le télomère qui précipite. Le filtrat est remis en réaction. Le télomère qui se forme précipite de nouveau. Au bout de 7 filtrations, on recueille 500g de télomères supports. Ces télomères se présentent sous forme de poudres blanches ($\overline{M}_n = 3600$) (rendement 85%).

2 : REACTIONS DE L'OXYDE DE TRIBUTYLETAIN

On utilise pour cette réaction la fraction des télomères de l'acide méthacrylique soluble dans le tétrahydrofuranne ($\overline{DP}_n = 27$).

Dans un ballon de 3 litres, on introduit 200g ($8.10^{-2}$ mole) de télomère support, 260g ($4,36.10^{-1}$ mole) d'oxyde de tributylétain et 2 litres de tétrahydrofuranne. On porte à reflux pendant 48 heures. Après refroidissement et évaporation partielle du solvant, le produit est précipité dans l'éther de pétrole. On recueille 380g de cotélomère greffé à 40%, (rendement 83%). Ces cotélomères se présentent sous forme de poudres blanches. Les sbustituants sont donc les suivants $R_1 = R_2 = CH_3$ ; $R_3 = C_4H_9$ ; $R_4 = H$ ; $M = CCl_3$ ; $Y = Cl$ et $n = 10,8$ et $p = 16,2$.

EXEMPLE 12 -

On réalise un cotélomère de la manière enseignée à l'exemple 11 en utilisant toutefois 455g d'oxyde de tributylétain. Le taux de greffage est alors de 70%, et l'on obtient après évaporation du solvant 525g de cotélomère cireux

0072719

(rendement : 80%).

EXEMPLE 13 -

On réalise un cotélomère de la manière enseignée à l'exemple 11 en ramplaçant toutefois les télomères de l'acide méthacrylique par les télomères de l'acide acrylique ($\overline{DP}_n$ = 50). On obtient un cotélomère se présentant également sous forme de poudre blanche avec une masse moléculaire moyenne $\overline{M}_n$ de 8000. Le rendement est sensiblement voisin de 75%. Les substituants sont les suivants : $R_1 = R_2 = H$ ; $R_3 = C_4H_9$ ; $R_4 = H$ ; $M = CCl_3$ ; $Y = Cl$, $n = 15,5$ ; $p = 34,5$.

EXEMPLE 14 -

On répète l'exemple 13 en modifiant uniquement la proportion d'oxyde de tributylétain. On peut ainsi préparer une série de cotélomères se différençiant uniquement par le taux de greffage. On a préparé les cotélomères dans lesquels : n = 10,8 et p = 39,2 puis n = 12,8 et p = 37,2 puis n = 19,5 et p = 30,5 puis n = 30,9 et p = 19,1.

Les trois premiers de ces cotélomères se présentent sous forme de poudre blanche alors que le dernier est une cire visqueuse.

EXEMPLE 15 -

On réalise un cotélomère de la manière enseignée à l'exemple 11 en utilisant toutefois des télogènes fluorés du type $Cl-(CFZ-CF_2)_m-CCl_3$ où m = 1,2 ou 3 et Z est indifféremment le chlore ou le fluor.

Dans un ballon de 3 litres on introduit 6,59 moles (567g) d'acide méthacrylique, 0,0516 mole (8,38g) de chlorure ferrique, 0,0516 mole (10,93g) de benzoïne, 0,83 mole (417g) de télomère $Cl-(CFCl-CF_2)_3-CCl_3$ et 1200 ml d'acétonitrile. On porte à reflux en agitant pendant 24 heures. Après refroidissement et évaporation partielle du solvant, le cotélomère est précipité dans l'hexane. On obtient après filtration 690g de cotélomère de masse moléculaire moyenne en nombre $\overline{M}_n$ = 2300 (rendement 70%).

Après solubilisation de ce cotélomère dans le tétrahydrofuranne on ajoute 715g (1,2 mole) d'oxyde de tributylétain. On porte à reflux pendant 48 heures. Après refroidissement et évaporation du solvant on obtient 1125g de cotélomère greffé à 40% (rendement 80%).

Les substituants sont donc les suivants :

$R_1 = CH_3$ ; $R_2 = CH_3$ ; $R_3 = C_4H_9$ ; $R_4 = H$ ; $M = Cl-(CFCl-CF_2)_3-CCl_2-$ ; $Y = Cl$ ; $n = 8$, $p = 12$.

EXEMPLE 16 -

On réalise un cotélomère substitué par le chlorure de tributylétain à partir de télomères supports à fonctions réactives.

1 : SYNTHESE DE TELOMERES SUPPORTS

On procède comme dans l'exemple 11;1.

2 : LA réaction de chlorure de tributylétain sur le télomère support est réalisée comme dans l'exeple 11.2. On obtient ainsi avec des rendements de l'ordre de 80% des cotélomères présentant des taux de greffage variant entre 10 et 70%.

Les télomères obtenus selon l'invention ont été testés tant en laboratoire qu'en milieu naturel. Au laboratoire, on a étudié la vitesse d'hydrolyse ou lixiviation du principe actif incorporé à une peinture biocide et on a déterminé l'espèce libérée par polarographie impulsionnelle. On a constaté de façon générale que les peintures comportant les cotélomères selon l'invention libèrent une quantité d'étain quasiment constante au cours des 800 heures d'essai. En revanche, une peinture biocide du commerce soumise aux mêmes essais libère dans les premières heures une quantité importante d'étain, quantité qui décroît rapidement au cours du temps.

| TEMPS HEURES | | 24 | 137 | 262 | 433 | 642 | 882 |
|---|---|---|---|---|---|---|---|
| PEINTURE DU COMMERCE | $H_i$ * | 272,5 | 702,5 | 1135 | 1485 | 1760 | 2065 |
| PEINTURE SELON L'INVENTION | $H_i$ * | 50,2 | 139,2 | 202,7 | 295,7 | 407,2 | 564,7 |

* $H_i$ : hauteur de la vague polarographique. $H_i$ est directement proportionnelle à la masse de principe actif libéré. Quant à l'espèce libérée, on a établi que celle-ci était uniquement constitué par le cation $R_3Sn^+$ lorsqu'on utilise le télomère selon l'invention; en revanche, la peinture du commerce étudiée à titre comparatif libère de l'oxyde de tributylétain insoluble dans le milieu naturel et par conséquent moins actif.

En milieu naturel, on a immergé à une profondeur de l'ordre de 70 cm une plaque comprenant trois zones en un lieu où la faune et la flore sous-marine sont en pleine croissance : une première zone non protégée, une seconde zone recouverte par une peinture biocide du commerce et une troisième recouverte par une peinture comportant une base classique et un cotélomère selon l'invention.

Au bout de six mois la première zone témoin est entièrement recouverte d'organismes marins, la deuxième zone est partiellement recouverte, la troisième zone est intacte. Un an après, la première zone témoin est recouverte de 7 cm d'épaisseur environ d'organismes marins et la deuxième zone de 3 cm environ; la troisième zone est intacte. Ceci démontre la supériorité de l'agent biocide constitué par le télomère selon l'invention.

0072719

REVENDICATIONS

1 - Télomère organométallique utilisable notamment comme agent biocide, caractérisé en ce qu'il est représenté par la formule suivante (I) :

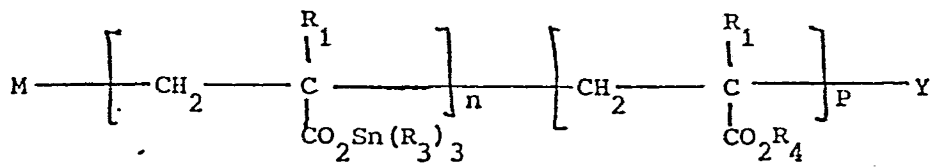 (I)

dans laquelle

- n et p représentent des nombres compris entre 1 et 100 tel que le rapport $\frac{n}{n+p}$ soit inférieur ou égal à 0,75;

- $R_1$ et $R_2$, identiques ou différents, représentent un atome d'hydrogène ou un groupement méthyle;

- $R_3$ représente un groupement alkyle linéaire ou ramifié de 1 à 12 atomes de carbone, un groupement phényle substitué ou non;

- $R_4$ représente un atome d'hydrogène ou l'une des significations indiquées pour $R_3$;

- M et Y provenant d'un agent de transfert dans lequel Y représente l'hydrogène, le chlore ou le brome et M un groupement organique électroattracteur.

2 - Télomère organométallique selon la revendication 1, caractérisé en ce que M est choisi parmi les groupements organiques électroattracteurs suivants :

$-CCl_3$, $-SR_5$, $-PO(OR_5)_2$, $-P(R_5)_2$, $-CCl_2-CO_2R_5$, $-CCl_2\{CH_2-C(R_6)(CO_2R_5)\}_mCl$

$-CCl_2\{CH_2-CH(CN)\}_mCl$, $-CCl_2\{CH_2-CH(C_6H_5)\}_mX$, $-CCl_2\{CH_2-CHCl\}_mX$,

$-CCl_2\{CH_2-CCl_2\}_mCl$, $-CCl_2\{CF_2-CFZ\}_mX$ et $-CCl_2\{CH_2-C(R_6)=CH-CH_2\}_mX$

dans lesquels m représente un nombre entier compris entre 1 et 100, $R_5$ un atome d'hydrogène ou un groupement alkyle comprenant 1 à 12 atomes de carbone, $R_6$ un atome d'hydrogène ou un groupement méthyle, Z indifféremment le chlore ou le fluor, X indifféremment le chlore ou l'hydrogène.

3 - Télomère organométallique selon la revendication 2, caractérisé en ce que m est compris entre 1 et 10, $R_5$ un groupement méthyle, éthyle, propyle ou butyle.

4 - Télomère organométallique selon la revendication 3, caractérisé en ce que

- Y représente le chlore;

- M est choisi parmi les groupements $-CCl_3$, $-CCl_2-CF_3$, $-CCl_2-COOCH_3$, $-CCl_2-CH_2-CHCl-COOCH_3$, $-CCl_2\{CF_2-CFZ\}_mCl$ où m = 1, 2 ou 3 et Z représente indifféremment le chlore ou le fluor,

- $R_3$ représente un groupement éthyle, propyle ou butyle,
- $R_4$ représente l'hydrogène ou un groupement méthyle.

5 - Télomère organométallique selon la revendication 3, caractérisé en ce que
- Y représente l'hydrogène ou le brome.
- M représente l'un des groupements $-CCl_3$ ou $PO(OC_2H_5)_2$
- $R_3$ représente un groupement éthyle, propyle ou butyle.
- $R_4$ représente l'hydrogène ou un groupement méthyle.

6 - Procédé de préparation d'un télomère organométallique selon la revendication 4, caractérisé en ce qu'on fait réagir ensemble un agent de transfert (II), un monomère organostannique (III), un comonomère acrylique (IV)

M - Y 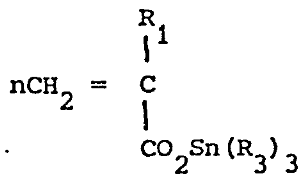 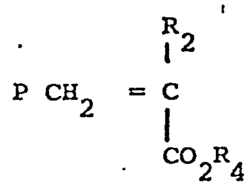

(II) (III) (IV)

M,Y,$R_1$,$R_2$,$R_3$,$R_4$ représentent les significations sus-indiquées, en présence d'un catalyseur constitué par une poudre métallique ou un sel métallique dans lequel le métal est susceptible de s'oxyder, d'un solvant polaire, pendant environ 10 à 48 heures et à une température voisine de la température d'ébullition du mélange.

7 - Procédé selon la revendication 6, caractérisé en ce que le solvant polaire est choisi parmi les nitriles tels l'acétonitrile, le propionitrile ou le butyronitrile, le catalyseur étant choisi parmi le groupe constitué par le fer, le cuivre, le magnésium, le chlorure cuivreux, le chlorure ferreux, le ferricyanure de potassium, le chlorure cuivrique, le ferrocyanure de potassium ou bien le chlorure ferrique en présence d'un agent réducteur tel la benzoïne.

8 - Procédé selon la revendication 6 ou 7, caractérisé en ce que le rapport des concentrations du catalyseur et du monomère est compris entre $3.10^{-3}$ et $3.10^{-2}$.

9 - Procédé de préparation d'un télomère organométallique selon la revendication 5, caractérisé en ce qu'on fait réagir ensemble un agent de transfert (II), un monomère organostannique (III) et un comonomère acrylique (IV).

MY 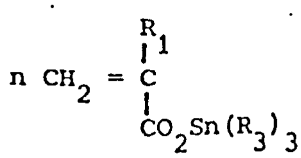 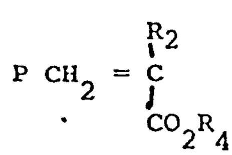

(II) (III) (IV)

$M, Y, R_1, R_2, R_3, R_4$ présentant l'une quelconque des significations sus-indiquées, en présence d'un catalyseur constitué par un amorceur radicalaire du type péroxyde de benzoyle ou azobis-isobutyronitrile, d'un solvant de télomérisation radicalaire du type benzène ou toluène, pendant environ 5 à 10 heures et à une température voisine de la température d'ébullition du mélange.

10 - Procédé selon la revendication 9, caractérisé en ce que le rapport des concentrations de l'agent de transfert (II) et des monomères est compris entre 2 et 10.

11 - Procédé de préparation d'un télomère organométallique selon la revendication 4, caractérisé en ce que dans une première étape on fait réagir un agent de transfert M.Y (II) avec un monomère acrylique (V) pour obtenir un télomère (VI) selon la réaction :

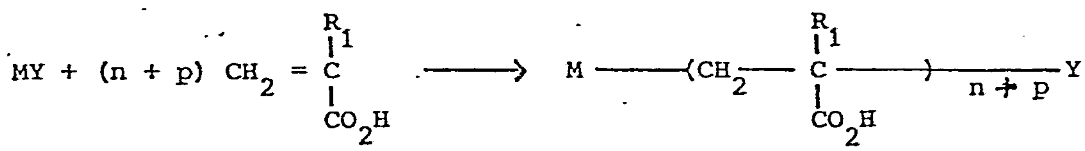

(II) (V) (VI)

dans lesquels np, $M, Y, R_1$ ont les significations sus-indiquées en présence d'un catalyseur constitué par une poudre métallique ou un sel métallique dans lequel le métal est susceptible de s'oxyder, d'un solvant polaire, le mélange obtenu étant maintenu à reflux pendant environ 1 à 48 heures, et en ce que dans une seconde étape on traite le télomère obtenu à l'aide d'un dérivé organostannique (VII) selon la réaction :

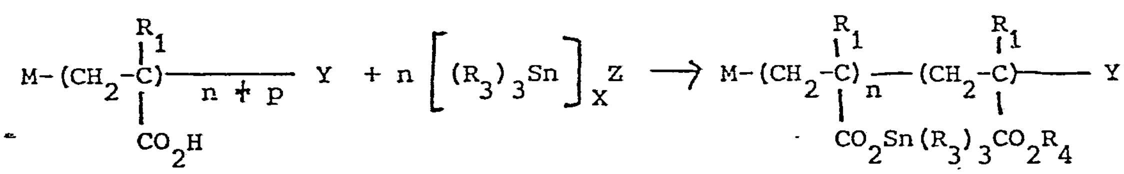

(VI) (VII) (I)

$R_3$ ayant la signification sus-indiquée et x = 2 quand Z est un atome d'oxygène et x = 1 quand Z est un atome de chlore, en présence d'un solvant tel que, le tétrahydrofuranne, le mélange obtenu étant porté à reflux pendant environ 10 à 48 heures.

12 - Procédé selon la revendication 11, caractérisé en ce que le dérivé organostannique (VII) est représenté par l'oxyde de tributylétain ou le chlorure de tributylétain.

13 - Composition biocide destinée à la lutte contre les organismes parasites, caractérisée en ce qu'elle renferme un télomère organométallique selon l'une quelconque des revendications 1 à 5.

14 - Composition biocide destinée à la lutte contre les organismes parasites, caractérisée en ce qu'elle renferme un télomère organométallique obtenu selon l'une quelconque des revendications 6 à 12.

15 - Composition biocide selon la revendication 13 ou 14 destinée à la lutte contre la croissance d'organismes marins, caractérisée en ce qu'elle comprend une base de peinture classique et environ 15 à 30% en poids du télomère organométallique.

0072719

Office européen des brevets

# RAPPORT DE RECHERCHE EUROPEENNE

Numéro de la demande

EP 82 40 1243

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| D,X | FR-A-1 384 699 (M & T CHEMICALS)<br>*Revendication 1; page 3, colonne 1, lignes 45-48*<br>--- | 1,6,13,14,15 | C 08 F 2/38<br>C 08 F 220/04<br>A 01 N 55/04<br>C 08 F 230/04 |
| X | AU-B- 466 764 (COMMONWEALTH OF AUSTRALIA)<br>*Revendication 1*<br>--- | 1,13,14,15 | |
| X | FR-A-2 363 589 (M & T CHEMICALS)<br>*Revendication 1*<br>----- | 1,13,14,15 | |

| DOMAINES TECHNIQUES RECHERCHES (Int. Cl. 3) |
|---|
| C 08 F<br>A 01 N |

Le présent rapport de recherche a été établi pour toutes les revendications

| Lieu de la recherche | Date d'achèvement de la recherche | Examinateur |
|---|---|---|
| LA HAYE | 18-10-1982 | CAUWENBERG C.L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82